# EUROPEAN PATENT SPECIFICATION

(11) **EP 2 418 789 B1**
(45) Date of publication and mention of the grant of the patent: **05.06.2013**
(21) Application number: 10305888.9
(22) Date of filing: 13.08.2010
(51) Int. Cl.: H04B 10/66

(54) **OPTOELECTRONIC DEVICE FOR DIFFERENTIAL PHOTORECEPTION, WITH AUTOMATIC COMPENSATION OF PHASE AND AMPLITUDE IMBALANCES**
Optoelektronische Vorrichtung für differentielle Photorezeption mit automatischer Kompensierung von Phasen- und Amplitudenschwankungen
Dispositif optoélectronique pour la photoréception différentielle avec compensation automatique de phase et déséquilibres d'amplitude

(43) Date of publication of application: 15.02.2012
(73) Proprietor: Alcatel Lucent, 75007 Paris (FR)
(72) Inventor: Dupuy, Jean-Yves, 91460, MARCOUSSIS (FR); Jorge, Filipe, 91460, MARCOUSSIS (FR); Konczykowska, Agnieszka, 91460, MARCOUSSIS (FR)
(74) Representative: Shamsaei Far, Hassan

(56) References cited:
- US-A1- 2007 047 971
- US-A1- 2007 212 081
- US-B1- 6 760 552

## Description

The present invention relates to optoelectronics, and in particular to optoelectronic devices that offer at least a photoreception function or constitute photoreceivers.

### BACKGROUND ART

As it is known by a person skilled in the art, in some technical domains, such as optical communication, differential signaling can be an efficient way of carrying information data with a better immunity to a certain number of parasitic signals. The information data is recovered by realizing a subtraction of two complementary signals, that need to be kept well balanced in phase and amplitude until the subtraction is realized.

In the case of optical communications, these two complementary signals are typically generated by an optical component from one or several input optical signals. Then, an optoelectronic device may be used, which typically comprises a photodetection means arranged for converting the first and second complementary optical signals into first and second complementary currents, and a processing means typically arranged for processing the first and second complementary currents to output a voltage that is proportional to the difference between the first and second complementary currents. Optionally, instead of only one output voltage, two complementary output voltages can be generated, if a differential signaling at the output is further required.

US 2007/047971 relates to a RZ-DPSK optical receiver circuit in which a received RZ-DPSK signal is guided to an interferometer. The interferometer comprises a 1-bit delaying element in an upper arm. A balanced photodiode converts a pair of optical signals output from the interferometer into electrical signal. A high-pass filter, which has a cut-off frequency equal or approximately equal to the symbol rate of transmission data, filters the signal output from the balanced photodiode. A BPSK demodulator circuit demodulates the output signal of the high-pass filter.

US 2007/212081 relates to an optical signal receiving circuit having a current-voltage converting circuit which receives the output current signal of a photoelectric converting circuit, converting an optical signal into the current signal, and converting the current signal into a voltage signal. A differential circuit in the subsequent stage to the current-voltage converting circuit uses a resistor as its current source to facilitate setting of an operating voltage level in the circuit. To eliminate an adverse effect of asymmetry of the output waveform from the differential circuit due to the use of the resistor, the reference voltage level as the other input to the reference circuit is generated from the output voltage signal of the current-voltage converting circuit by a voltage generating circuit incorporating a feed-forward-controlling connection.

### SUMMARY

The above-mentioned optoelectronic devices may be of two types. A first type comprises the so called balanced photoreceivers, whose photodetection means typically comprises a balanced photodetector composed of two photodiodes which are connected in such a way that they output a single-ended current which is proportional to the difference between the two complementary input optical signals, and whose processing means comprises a trans-impedance amplifier, having an input connected to the two photodiodes' common output, and providing a single-ended output voltage, and optionally a complementary output voltage if a differential signaling at the output is further required.

A second type typically comprises the so called differential photoreceivers, whose photodetection means comprises two independent and identical photodiodes, and whose processing means comprises a differential trans-impedance amplifier having first and second inputs connected respectively to the outputs of the photodiodes and providing a single-ended output voltage which is proportional to the difference between the two complementary input currents, and optionally a second complementary output voltage if differential signaling at the output is further required.

However, the components that are combined to produce these optoelectronic devices and the fabrication processes of these components and optoelectronic devices often introduce imperfections causing imbalances between the two complementary signals before they are subtracted, thus degrading the reception performance.

Since typically no imbalance compensation can be realized by these optoelectronic devices, specific and demanding characteristics may be required for the components and fabrication processes involving the components in which differential signaling is used (for instance from the optical demodulator outputs that provide the two complementary optical signals to the photodetection means of the photoreceiver). This may lead to costly components and fabrication processes. Furthermore, whatever the quality of the components and fabrication processes, the optoelectronic devices may have remaining imperfections and possible characteristic shifts during their lifetime, and therefore the ultimate performance benefit that should bring the differential detection may become hard to achieve.

Some embodiments of this invention aim at enabling automatic compensation of amplitude and phase imbalances into optoelectronic devices comprising a photodetection means arranged for converting first and second complementary optical signals into first and second complementary currents, and a processing means arranged for processing the first and second complementary currents to output at least a first output voltage (and optionally a second complementary output voltage if a differential signaling at the output is further required).

For this purpose, the processing means of such optoelectronic devices may comprise:
- a conversion means arranged for separately converting the first and second complementary currents into first and second operating voltages,
- a balancing means arranged for balancing phase and amplitude of the first and second operating voltages, and
- a differential amplification means arranged for applying a subtraction function to the first and second operating voltages with balanced phase and amplitude to produce at least the first output voltage, said ouput voltage being proportional to a difference between the first and second operating voltages with balanced phase and amplitude (and optionally the second complementary output voltage).

The optoelectronic device according to the invention may include additional characteristics considered separately or combined, and notably:
- its conversion means may comprise first and second independent trans-impedance amplification means arranged for converting respectively the first and second complementary currents into the first and second operating voltages;
- its balancing means may comprise i) first and second independent phase and amplitude adjustment means arranged for adjusting respectively the phase and amplitude of the first and second operating voltages as a function of control signals (currents or voltages), and ii) a phase and amplitude error detector arranged for comparing the phases and amplitudes of the first and second operating voltages with balanced phase and amplitude, outputted by the first and second independent phase and amplitude adjustment means, to determine phase and amplitude imbalances, and for producing the control signals (currents or voltages) representative of phase and amplitude adjustments to be carried out by the first and second independent phase and amplitude adjustment means to compensate for the determined phase and amplitude imbalances;
   ➢ each of the first and second independent phase and amplitude adjustment means may comprise a variable delay means arranged for adjusting the phase, and a variable gain means arranged for adjusting the amplitude;
   ➢ the phase and amplitude error detector may comprise a phase comparator comprising an XOR means arranged for applying an XOR logical function to the first and second operating voltages with balanced phase and amplitude, and an amplitude comparator comprising a peak detector and a differential amplifier arranged for comparing the amplitudes of the first and second operating voltages with balanced phase and amplitude;
- its photodetection means may comprise first and second independent photodiodes arranged for converting respectively the first and second complementary optical signals into the first and second complementary currents;
- it may constitute a differential photoreceiver.

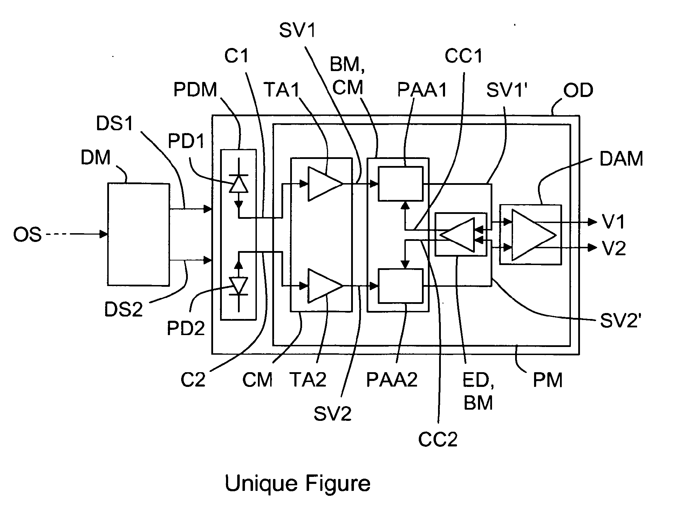

### BRIEF DESCRIPTION OF THE DRAWING

Other features and advantages of the invention will become apparent on examining the detailed specifications hereafter and the appended drawing, wherein the unique figure schematically and functionally illustrates an optical demodulator connected to an example of embodiment of an optoelectronic device according to embodiments of the invention.

The appended drawing may serve not only to complete the invention, but also to contribute to its definition, if need be.

### DETAILED DESCRIPTION

Embodiments of the invention aim at providing an optoelectronic device OD capable of automatically compensating for amplitude and phase imbalances.

In the following description, it will be considered, as example, that the optoelectronic device OD is a differential photoreceiver. But, the optoelectronic device OD could be also a device offering several functions and notably photoreception.

As illustrated in the unique figure, an optoelectronic device OD, according to the invention, comprises at least a photodetection means PDM and a processing means PM.

The photodetection means PDM comprises first and second inputs which may be connected respectively to first and second outputs of an optical demodulator DM. The optical demodulator DM is arranged for demodulating each input optical signal it receives on its input to produce first DS1 and second DS2 optical complementary signals that it outputs onto its first and second outputs.

The photodetection means PDM may be arranged for converting the first DS1 and second DS2 complementary optical signals (respectively received on its first and second inputs) into first C1 and second C2 complementary currents.

For instance, and as illustrated in the unique figure, the photodetection means PDM may comprise first PD1 and second PD2 independent and (preferably) identical photodiodes PD1 and PD2. Herein, the term "independent" is to be understood to refer to the fact that the two photodiodes PD1 and PD2 are not coupled together.

These first PD1 and second PD2 photodiodes are arranged for converting respectively the first SD1 and second SD2 complementary optical signals into the first C1 and second C2 complementary currents.

The photodetection means PDM may further comprise further typical ancillary components, such as biasing and decoupling networks, which themselves may comprise capacitors and resistors.

The processing means PM may be an electronic circuit or an integrated component. It is arranged for processing the first C1 and second C2 complementary currents (outputted by the photodetection means PDM) to output at least a first output voltage V1, and optionally a second complementary output voltage V2 if a differential signaling at the output is further required.

For instance, the second output voltage V2, complementary to the first output voltage V1, is equal to the opposite of this first output voltage V1 (i.e. V2 =-V1).

More precisely, according to some embodiments of the invention and as illustrated in the unique figure, the processing means PM may comprise a conversion means CM, a balancing means BM and a differential amplification means DAM.

The conversion means CM may comprises first and second inputs that are respectively connected to the outputs of the photodetection means PDM to be fed respectively with the first C1 and second C2 complementary currents. It is arranged for separately converting the received first C1 and second C2 complementary currents into first SV1 and second SV2 operating voltages that it outputs respectively on first and second outputs. Herein, the terms "operating voltage" are to be understood to refer to voltage having values comprised into an interval which is adapted for a normal operation of the means that receive such voltage at respective input(s) thereof.

For instance, and as illustrated in the unique figure, the conversion means CM may comprise first TA1 and second TA2 independent and preferably identical trans-impedance amplification means which are arranged for converting respectively the first C1 and second C2 complementary currents into the first SV1 and second SV2 operating voltages. For instance, each trans-impedance amplification means TA1, TA2 is a single-ended trans-impedance amplifier.

The conversion means CM may comprise additional processing means downstream the two trans-impedance amplification means TA1 and TA2 to further optimize the signals, and notably a balancing means BM.

This balancing means BM comprises first and second inputs that are respectively connected to the first and second outputs of the conversion means CM to be fed respectively with the first SV1 and second SV2 operating voltages. It is arranged for balancing the phase and amplitude of these first SV1 and second SV2 operating voltages.

For instance, and as illustrated in the unique figure, the balancing means BM may comprise first PAA1 and second PAA2 independent and preferably identical phase and amplitude adjustment means and a phase and amplitude error detector ED.

The first phase and amplitude adjustment means PAA1 has a first input connected to the first output of the conversion means CM to be fed with the first operating voltage SV1, and a second input connected to a first output of the phase and amplitude error detector ED to be fed with a first control signal (current or voltage) CC1. The second phase and amplitude adjustment means PAA2 has a first input connected to the second output of the conversion means CM to be fed with the second operating voltage SV2, and a second input connected to a second output of the phase and amplitude error detector ED to be fed with a second control signal (current or voltage) CC2.

These first PAA1 and second PAA2 phase and amplitude adjustment means are arranged for adjusting respectively the phase and amplitude of the first SV1 and second SV2 operating voltages as a function of the first CC1 and second CC2 control signals (currents or voltages) and comprise respectively outputs to output first SV1' and second SV2' operating voltages with adjusted phase and amplitude.

For instance, each of the first PAA1 and second PAA2 phase and amplitude adjustment means may comprise a variable delay means, which is arranged for adjusting the phase of the first SV1 or second SV2 operating voltage, and a variable gain means, which is arranged for adjusting the amplitude of the first SV1 or second SV2 operating voltage.

Herein the terms "variable delay means" are to be understood to refer to an electronic component that is capable of modifying the delay it introduces onto a signal as a function of a control signal (current or voltage). Such a variable delay means can be implemented by means of a so-called "selector" in charge of selecting among several delayed versions of the input signal depending on a control signal (current or voltage), for instance. Moreover, herein the terms "variable gain means" are to be understood to refer to an electronic component that is capable of modifying its gain as a function of a control signal (current or voltage). Such a variable gain means can be implemented by means of the well known Gilbert cell, for instance.

The phase and amplitude error detector ED comprises first and second inputs, connected respectively to the outputs of the first PAA1 and second PAA2 phase and amplitude adjustment means, and first and second outputs, connected respectively to the second inputs of the first PAA1 and second PAA2 phase and amplitude adjustment means. The phase and amplitude error detector ED is notably arranged for comparing the phases and amplitudes of the first SV1' and second SV2' operating voltages with balanced phase and amplitude, that are outputted respectively by the first and second outputs of the first PAA1 and second PAA2 phase and amplitude adjustment means, in order to determine possible phase and amplitude imbalances therebetween. The phase and amplitude error detector ED is also arranged for producing the first CC1 and second CC2 control signals (currents or voltages) that are intended respectively to control the operation of the first PAA1 and second PAA2 phase and amplitude adjustment means and which are representative of phase and amplitude adjustments to be carried out by these first PAA1 and second PAA2 phase and amplitude adjustment means to compensate for the determined phase and amplitude imbalances between the first SV1' and second SV2' operating voltages with balanced phase and amplitude they respectively output.

For instance, the phase and amplitude error detector ED may comprise a phase comparator and an amplitude comparator. Said phase comparator may comprise an XOR (exclusive OR) means arranged for applying an XOR logical function to the first SV1' and second SV2' operating voltages with balanced phase and amplitude. Herein the terms "XOR means" are to be understood to refer to an electronic component capable of outputting a signal representative of the result of a XOR logical function applied on two input signals. The phase comparator may further comprise some low pass filter(s) with some usual processing means after the XOR means in order to finally generate a suitable signal (voltage or current), that is proportional or at least representative in some way of the phase difference between the first SV1' and second SV2' operating voltages.

The amplitude comparator may comprise a peak detector and a differential amplifier arranged for comparing the respective amplitudes of the first SV1' and second SV2' operating voltages with balanced phase and amplitude. The amplitude comparator may comprise capacitor(s) and diode(s), to create a signal which is proportional or at least representative in some way of the amplitude of each first SV1' and second SV2' operating voltages, a differential amplifier for comparing said first SV1' and second SV2' operating voltages, and possibly further known processing means to generate a suitable amplitude error signal.

So, the balancing means BM acts as an automatic feedback loop capable of compensating for amplitude and phase imbalances between the first SV1 and second SV2 operating voltages.

The differential amplification means DAM comprises first and second inputs that are respectively connected to the first and second outputs of the balancing means BM (i.e. the ones of the first PAA1 and second PAA2 phase and amplitude adjustment means) to be fed respectively with the first SV1' and second SV2' operating voltages with balanced phase and amplitude.

This differential amplification means DAM is arranged for applying a subtraction function to the first SV1' and second SV2' operating voltages with balanced phase and amplitude in order to produce the first output voltage V1 that is proportional to the difference between the first SV1' and second SV2' operating voltages with balanced phase and amplitude, and optionally a second complementary output voltage V2 if a differential signaling at the output is further required.

The invention offers several advantages amongst which the following are in particular worth mentioning:
- simplification and cost reduction of differential detection,
- a powerful solution to efficiently implement differential detection without requiring a balanced photodetector,
- an improvement of the components and fabrication tolerances and therefore a cost reduction.

The invention is not limited to the embodiments of optoelectronic device described above, only as examples, but it encompasses all alternative embodiments which may be considered by one skilled in the art within the scope of the claims hereafter.

## Claims

1. Optoelectronic device (OD) comprising a photodetection means (PDM) arranged for converting first and second complementary optical signals into first and second complementary currents, and a processing means (PM) arranged for processing said first and second complementary currents to output at least a first output voltage (V1), wherein said processing means (PM) comprises i) a conversion means (CM) arranged for separately converting said first and second complementary currents into first and second operating voltages, ii) a balancing means (BM) arranged for balancing phase and amplitude of said first and second operating voltages, and iii) a differential amplification means (DAM) arranged for applying a subtraction function to said first and second operating voltages with balanced phase and amplitude to produce at least said first output voltage (V1), which is proportional to the difference between said first and second operating voltages with balanced phase and amplitude; wherein said operating voltage is a voltage having a value comprised within normal operation voltage values and wherein balancing phase and amplitude of an operating voltage comprises adjusting respectively a phase and an amplitude of said voltage as a function of a respective control signal.

2. Optoelectronic device according to claim 1, wherein said conversion means (CM) comprises first (TA1) and second (TA2) independent trans-impedance amplification means arranged for converting respectively said first and second complementary currents into said first and second complementary operating voltages.

3. Optoelectronic device according to any one of claims 1 and 2, wherein said balancing means (BM) comprises i) first (PAA1) and second (PAA2) independent phase and amplitude adjustment means arranged for adjusting respectively the phase and amplitude of said first and second operating voltages as a function of control signals, and ii) a phase and amplitude error detector (ED) arranged for comparing respective phases of said first and second operating voltages with the balanced phase and respective amplitude of said first and second operating voltages with the balanced amplitude, outputted by said first (PAA1) and second (PAA2) independent phase and amplitude adjustment means, to determine phase and amplitude imbalances, and for producing said control signals representative of phase and amplitude adjustments to be carried out by said first (PAA1) and second (PAA2) independent phase and amplitude adjustment means to compensate for said determined phase and amplitude imbalances.

4. Optoelectronic device according to claim 3, wherein each of said first (PAA1) and second (PAA2) independent phase and amplitude adjustment means comprises a variable delay means arranged for adjusting said phase, and a variable gain means arranged for adjusting said amplitude.

5. Optoelectronic device according to one of claims 3 and 4, wherein said phase and amplitude error detector (ED) comprises a phase comparator comprising an XOR means arranged for applying an XOR logical function to said first and second operating voltages with balanced phase and amplitude, and an amplitude comparator comprising a peak detector and a differential amplifier arranged for comparing the amplitudes of said first and second operating voltages with balanced phase and amplitude.

6. Optoelectronic device according to any one of claims 1 to 5, wherein said photodetection means (PDM) comprises first (PD1) and second (PD2) independent photodiodes (PD1, PD2) arranged for converting respectively said first and second complementary optical signals into said first and second currents.

7. Optoelectronic device according to any one of claims 1 to 6, wherein said differential amplification means (DAM) is arranged for outputting a second output voltage (V2) which is complementary of said first output voltage (V1).

8. Optoelectronic device according to any one of claims 1 to 7, wherein it constitutes a differential photoreceiver.

## Patentansprüche

1. Optoelektronische Vorrichtung (OD) mit einem Photodetektionsmittel (PDM), welches dazu ausgelegt ist, ein erstes und ein zweites komplementäres optisches Signal in einen ersten und einen zweiten komplementären Strom zu konvertieren, und einem Verarbeitungsmittel (PM), welches dazu ausgelegt ist, den besagten ersten und den besagten zweiten komplementären Strom zu verarbeiten, um mindestens eine erste Ausgangsspannung (V1) auszugeben, wobei das besagte Verarbeitungsmittel (PM) i) ein Konversionsmittel (CM), welches dazu ausgelegt ist, den besagten ersten und den besagten zweiten komplementären Strom separat in eine erste und eine zweite Betriebsspannung zu konvertieren, ii) ein Ausgleichsmittel (BM), welches dazu ausgelegt ist, die Phase und die Amplitude der besagten ersten und der besagten zweiten Betriebsspannung auszugleichen, und iii) ein differentielles Verstärkungsmittel (DAM), welches dazu ausgelegt ist, eine Subtraktionsfunktion auf die besagte erste und die besagte zweite Betriebsspannung mit ausgeglichener Phase und Amplitude anzuwenden, um mindestens die besagte erste Ausgangsspannung (V1), welche proportional zur Differenz zwischen der besagten ersten und der besagten zweiten Betriebsspannung mit ausgeglichener Phase und Amplitude ist, zu erzeugen, umfasst; wobei die besagte Betriebsspannung eine Spannung mit einem innerhalb von normalen Betriebsspannungswerten begriffenen Wert ist, und wobei das Ausgleichen der Phase und der Amplitude einer Betriebsspannung das jeweilige Anpassen einer Phase und einer Amplitude der besagten Spannung in Abhängigkeit von einem entsprechenden Steuersignal umfasst.

2. Optoelektronische Vorrichtung nach Anspruch 1, wobei das besagte Konversionsmittel (CM) ein erstes (TA1) und ein zweites (TA2) unabhängiges Transimpedanzverstärkungsmittel umfasst, welches dazu ausgelegt ist, jeweils den besagten ersten und den besagten zweiten komplementären Strom in die besagte erste und die besagte zweite komplementäre Betriebsspannung zu konvertieren.

3. Optoelektronische Vorrichtung nach einem beliebigen der Ansprüche 1 und 2, wobei das Ausgleichsmittel (BM) i) ein erstes (PAA1) und ein zweites (PAA2) unabhängiges Phasen- und Amplitudenanpassungsmittel, welches dazu ausgelegt ist, jeweils die Phase und die Amplitude der besagten ersten und der besagten zweiten Betriebsspannung in Abhängigkeit von den Steuersignalen anzupassen, und ii) einen Phasen- und Amplitudenfehlerdetektor (ED), welcher dazu ausgelegt ist, entsprechende Phasen der besagten ersten und der besagten zweiten Betriebsspannung mit der ausgeglichenen Phase und entsprechenden Amplitude der besagten ersten und der besagten zweiten Betriebsspannung mit der ausgeglichenen Amplitude, welche von dem besagten ersten (PAA1) und dem besagten zweiten (PAA2) unabhängigen Phasen- und Amplitudenanpassungsmittel ausgegeben werden, zu vergleichen, um Phasen- und Amplitudenungleichgewichte zu ermitteln, und um die besagten Steuersignale, welche für die durch das besagte erste (PAA1) und das besagte zweite (PAA2) unabhängige Phasen- und Amplitudenanpassungsmittel durchzuführenden Phasen- und Amplitudenanpassungen repräsentativ sind, zu erzeugen, um die besagten ermittelten Phasen- und Amplitudenungleichgewichte zu kompensieren, umfasst.

4. Optoelektronische Vorrichtung nach Anspruch 3, wobei sowohl das besagte erste (PAA1) als auch das besagte zweite (PAA2) unabhängige Phasen- und Amplitudenanpassungsmittel ein variables Verzögerungsmittel, welches für das Anpassen der besagten Phase ausgelegt ist, und ein variables Verstärkungsmittel, welches für das Anpassen der besagten Amplitude ausgelegt ist, umfasst.

5. Optoelektronische Vorrichtung nach einem beliebigen der Ansprüche 3 und 4, wobei der besagte Phasen- und Amplitudenfehlerdetektor (ED) einen Phasenkomparator mit einem XOR-Mittel, welches dazu ausgelegt ist, eine logische XOR-Funktion auf die besagte erste und die besagte zweite Betriebsspannung mit ausgeglichener Phase und Amplitude anzuwenden, und einen Amplitudenkomparator mit einem Spitzendetektor und einem differentiellen Verstärker, welcher dazu ausgelegt ist, die Amplituden der besagten ersten und der besagten zweiten Betriebsspannung mit ausgeglichener Phase und Amplitude zu vergleichen, umfasst.

6. Optoelektronische Vorrichtung nach einem beliebigen der Ansprüche 1 bis 5, wobei das besagte Photodetektionsmittel (PDM) eine erste (PD1) und eine zweite (PD2) unabhängige Photodiode (PD1, PD2), welche dazu ausgelegt ist, jeweils das besagte erste und das besagte zweite komplementäre optische Signal in den besagten ersten und den besagten zweiten Strom zu konvertieren, umfasst.

7. Optoelektronische Vorrichtung nach einem beliebigen der Ansprüche 1 bis 6, wobei das besagte differentielle Verstärkungsmittel (DAM) für die Ausgabe einer zweiten Ausgangsspannung (V2), welche die besagte erste Ausgangsspannung (V1) ergänzt, ausgelegt ist.

8. Optoelektronische Vorrichtung nach einem beliebigen der Ansprüche 1 bis 7, wobei sie einen differentiellen Photoempfänger bildet.

## Revendications

1. Dispositif optoélectronique (OD) comprenant un moyen de photodétection (PDM) conçu pour convertir des premier et deuxième signaux optiques complémentaires en des premier et deuxième courants complémentaires, et un moyen de traitement (PM) conçu pour traiter lesdits premier et deuxième courants complémentaires pour délivrer en sortie au moins une première tension de sortie (V1), ledit moyen de traitement (PM) comprenant i) un moyen de conversion (CM) conçu pour convertir séparément lesdits premier et deuxième courants complémentaires en des première et deuxième tensions de fonctionnement, ii) un moyen d'équilibrage (BM) conçu pour équilibrer la phase et l'amplitude desdites première et deuxième tensions de fonctionnement, et iii) un moyen d'amplification différentielle (DAM) conçu pour appliquer une fonction de soustraction auxdites première et deuxième tensions de fonctionnement présentant une phase et une amplitude équilibrées pour produire au moins ladite première tension de sortie (V1), qui est proportionnelle à la différence entre lesdites première et deuxième tensions de fonctionnement présentant une phase et une amplitude équilibrées ;
dans lequel ladite tension de fonctionnement est une tension ayant une valeur comprise dans des valeurs de tension de fonctionnement normales et dans lequel l'équilibrage d'une phase et d'une amplitude d'une tension de fonctionnement comprend le réglage respectif d'une phase et d'une amplitude de ladite tension en fonction d'un signal de commande respectif.

2. Dispositif optoélectronique selon la revendication 1, dans lequel ledit moyen de conversion (CM) comprend un premier (TA1) et un deuxième (TA2) moyens d'amplification de transimpédance indépendants conçus pour convertir respectivement lesdits premier et deuxième courants complémentaires en lesdites première et deuxième tensions de fonctionnement complémentaires.

3. Dispositif optoélectronique selon l'une quelconque des revendications 1 et 2, dans lequel ledit moyen d'équilibrage (BM) comprend i) des premier (PAA1) et deuxième (PAA2) moyens de réglage de phase et d'amplitude indépendants conçus pour régler respectivement la phase et l'amplitude desdites première et deuxième tensions de fonctionnement en fonction de signaux de commande, et ii) un détecteur d'erreur de phase et d'amplitude (ED) conçu pour comparer des phases respectives desdites première et deuxième tensions de fonctionnement à la phase équilibrée et une amplitude respective desdites première et deuxième tensions de fonctionnement à l'amplitude équilibrée, délivrée en sortie par lesdits premier (PAA1) et deuxième (PAA2) moyens de réglage de phase et d'amplitude indépendants, pour déterminer des déséquilibres de phase et d'amplitude, et pour produire lesdits signaux de commande représentatifs des réglages de phase et d'amplitude devant être effectués par lesdits premier (PAA1) et deuxième (PAA2) moyens de réglage de phase et d'amplitude indépendants pour compenser lesdits déséquilibres de phase et d'amplitude déterminés.

4. Dispositif optoélectronique selon la revendication 3, dans lequel chacun desdits premier (PAA1) et deuxième (PAA2) moyens de réglage de phase et d'amplitude indépendants comprend un moyen de retard variable conçu pour régler ladite phase, et un moyen de gain variable conçu pour régler ladite amplitude.

5. Dispositif optoélectronique selon l'une des revendications 3 et 4, dans lequel ledit détecteur d'erreur de phase et d'amplitude (ED) comprend un comparateur de phases comprenant un moyen OU exclusif conçu pour appliquer une fonction logique OU exclusif auxdites première et deuxième tensions de fonctionnement présentant une phase et une amplitude équilibrées, et un comparateur d'amplitudes comprenant un détecteur de crête et un amplificateur différentiel conçu pour comparer les amplitudes desdites première et deuxième tensions de fonctionnement présentant une phase et une amplitude équilibrées.

6. Dispositif optoélectronique selon l'une quelconque des revendications 1 à 5, dans lequel ledit moyen de photodétection (PDM) comprend des première (PD1) et deuxième (PD2) photodiodes indépendantes (PD1, PD2) conçues pour convertir respectivement lesdits premier et deuxième signaux optiques complémentaires en lesdits premier et deuxième courants.

7. Dispositif optoélectronique selon l'une quelconque des revendications 1 à 6, dans lequel ledit moyen d'amplification différentielle (DAM) est conçu pour délivrer en sortie une deuxième tension de sortie (V2) qui est complémentaire de ladite première tension de sortie (V1).

8. Dispositif optoélectronique selon l'une quelconque des revendications 1 à 7, constituant un photorécepteur différentiel.
